(19) Europäisches Patentamt
European Patent Office
Office européen des brevets

(11) Veröffentlichungsnummer: **0 169 592**
**B1**

(12) # EUROPÄISCHE PATENTSCHRIFT

(45) Veröffentlichungstag der Patentschrift: **09.03.88**

(51) Int. Cl.[4]: **C 03 C 25/02,** C 08 L 83/06

(21) Anmeldenummer: **85200967.9**

(22) Anmeldetag: **19.06.85**

(54) **Optische Glasfaser mit einer Kunststoffbedeckung.**

(30) Priorität: **22.06.84 NL 8401982**

(43) Veröffentlichungstag der Anmeldung:
**29.01.86 Patentblatt 86/5**

(45) Bekanntmachung des Hinweises auf die Patenterteilung:
**09.03.88 Patentblatt 88/10**

(84) Benannte Vertragsstaaten:
**DE FR GB IT NL SE**

(56) Entgegenhaltungen:
**DE - A - 2 726 041**
**GB - A - 2 067 210**
**US - A - 4 324 575**

(73) Patentinhaber: **N.V. Philips' Gloeilampenfabrieken, Groenewoudseweg 1, NL-5621 BA Eindhoven (NL)**

(72) Erfinder: **Broer, Dirk Jan, c/o INT. OCTROOIBUREAU B.V. Prof. Holstlaan 6, NL-5656 AA Eindhoven (NL)**
Erfinder: **Mol, Grietje Neeltje, c/o INT. OCTROOIBUREAU B.V. Prof. Holstlaan 6, NL-5656 AA Eindhoven (NL)**

(74) Vertreter: **Auwerda, Cornelis Petrus et al, INTERNATIONAAL OCTROOIBUREAU B.V. Prof. Holstlaan 6, NL-5656 AA Eindhoven (NL)**

**EP 0 169 592 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine optische Glasfaser mit einer Kunststoffbedeckung, mit einer Glasfaser und einer umhüllenden Schicht aus einem Kunstgummi mit einer Brechzahl, die höher als die der äusseren Schicht des Glasfaser ist, wobei das Kunstgummi aus einer härtbaren Kunststoffzusammensetzung gebildet ist, die ein Kopolymer aufweist, das als monomere Einheiten Dimethylsiloxan und mindestens ein Siloxan aus der Gruppe enthält, die durch Methyl-phenylsiloxan und Diphenylsiloxan gebildet ist, wobei das Siloxankopolymer mindestens zwei Akrylatestergruppen je Molekül aufweist.

Derartige optische Glasfasern werden zur Übertragung von Lichtsignalen für Fernmeldezwecke verwendet.

Eine derartige optische Glasfaser ist in der älteren EP-A-0 155 051 (veröffentlicht 18.9.85) beschrieben. Das verwendete Siloxankopolymer hat ein mittleres Molekulargewicht zwischen 1000 und 25000. Die härtbare Kunststoffzusammensetzung kann weiterhin noch eine oder mehrere monomere Akrylatverbindungen und einen durch Licht aktivierbaren Initiator aufweisen. Die härtbare Kunststoffzusammensezung wird unmittelbar nach der Bildung der Glasfaser darauf angebracht und durch Bestrahlung mit UV-Licht oder mit Elektronen ausgehärtet. Die Aushärtezeit ist kürzer als 5 s, vorzugsweise kürzer als 0,5 s. Das durch das Aushärten gebildete Kunstgummi hat eine Brechzahl, die grösser ist als 1,46, ein Elastizitätsmodul zwischen 0,1 und 10 MPa und eine Glasübergangstemperatur von −50°C oder niedriger. Dieses Kunstgummi hat jedoch eine geringe Verschleissfestigkeit und mechanische Festigkeit, was bei Transport und Lagerung der optischen Glasfaser und beim Verarbeiten der Faser zu einem Kabel nachteilig ist. Die mechanische Festigkeit kann zwar dadurch vergrössert werden, dass ein anorganisches Füllmittel dem Kunstgummi zugefügt wird, aber dies bringt den Nachteil mit sich, dass die optische Glasfaser durch die Füllteilchen beschädigt werden kann. Die weiche Kunstgummischicht wird im allgemeinen von einer zweiten härteren Kunststoffbedeckung geschützt.

Die Erfindung hat nun die Aufgabe, eine optische Glasfaser mit einer Kunststoffbedeckung mit den obengenannten gewünschten Eigenschaften zu schaffen, wobei die Kunststoffbedeckung ausserdem eine grosse Verschleissfestigkeit und mechanische Festigkeit aufweist. Dies soll vorzugsweise ohne Verwendung anorganischer Füllmittel erreicht werden.

Diese Aufgabe wird nach der Erfindung durch Verwendung einer härtbaren Kunststoffzusammensetzung gelöst, die ausserdem ein Polyurethanakrylat mit einem mittleren Molekulargewicht über 3000 aufweist. Vorzugsweise weist die härtbare Kunststoffzusammensetzung 5 bis 60 Gew.-% des Polyurethanakrylats auf.

In einer geeigneten Ausführungsform der optischen Glasfaser nach der Erfindung ist das Polyurethanakrylat eine Verbindung mit der folgenden Strukturformel:

$$CH_2=CH-\underset{\underset{O}{\|}}{C}-O-R_3-\underset{\underset{O}{\|}}{C}-NH-R_2-NH-\underset{\underset{O}{\|}}{C}-O-R_1-\underset{\underset{O}{\|}}{C}-NH-R_2-NH-\underset{\underset{O}{\|}}{C}-O-R_3-\underset{\underset{O}{\|}}{C}-CH=CH_2$$

worin $R_1$ aus der folgenden Gruppe gewählt ist

$$-(CH_2-CH_2-O)_n-,\quad -(CH_2-\underset{\underset{CH_3}{\|}}{CH}-O)_n-,\quad -(CH_2-CH_2-CH_2-CH_2-O)_n-$$

und

$$-CH_2-CH_2-O+\underset{\underset{O}{\|}}{C}-(CH_2)_4-\underset{\underset{O}{\|}}{C}-O-CH_2-CH_2-O+_m$$

worin n im Schnitt grösser als 60 ist und m im Schnitt grösser als 30 ist, worin $R_2$ aus der folgenden Gruppe gewählt ist:

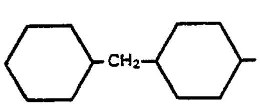

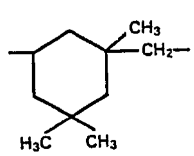

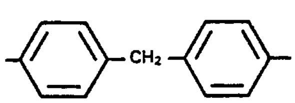

und

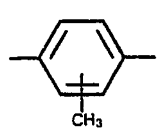

und worin $R_3$ aus der folgenden Gruppe gewählt ist:

$$-(CH_2-CH_2-O)_p-\quad \text{und}\quad (CH_2-\underset{\underset{CH_3}{|}}{CH}-O)_p-$$

worin p mindestens 1 ist.

Das Polyurethanakrylat ist ein Polyetherurethanakrylat oder ein Polyesterurethanakrylat, und zwar abhängig von der Wahl von $R_1$.

Um zu vermeiden, dass die geeignete niedrige Glasübergangstemperatur des Siloxankopolymers durch Hinzuführung des Polyurethanakrylats auf einen unerwünschten Wert erhöht wird, ist es erwünscht, dass n im Schnitt grösser als 60 ist oder m im Schnitt grösser als 30 ist. Ein zu hoher Mittelwert von n oder m führt dagegen zu einer zu geringen mechanischen Festigkeit der ausgehärteten Kunststoffzusammensetzung.

Um eine gute Mischbarkeit des Siloxankopolymers und des Polyurethanakrylats zu erreichen, ist es erwünscht, dass das Siloxankopolymer einen ausreichend hohen Gehalt an aromatischen Gruppen oder an Akrylatestergruppen aufweist. Eine geeignete Menge an Akrylatestergruppen ist beispielsweise 0,1 je monomerer Einheit in dem Siloxankopolymer. Ein zu hohen Gehalt an aromatischen Gruppen führt jedoch zu einer zu hohen Glasübergangstemperatur des Kunstgummis. Ein zu hoher Gehalt an Akrylatestergruppen ohne weiteres führt zu einem zu hohen Elastizitätsmodul des Kunstgummis. Um eine gute Mischbarkeit bei einem gewünschten niedrigen Wert der Glasübergangstemperatur und des Elastizitätsmoduls zu bewirken ist es zweckmässig, dass das Siloxankopolymer polare Gruppen aufweist. Vorzugsweise sind diese polaren Gruppen Hydroxylgruppen.

In einer geeigneten Ausführungsform der Glasfaser mit Kunststoffbedeckung nach der Erfindung weist das Siloxankopolymer als monomere Einheiten mindestens eine der nachfolgenden Gruppen auf:

$$\begin{array}{l} \quad | \\ CH_3\text{-}Si\text{-}(CH_2)_3\text{-}O\text{-}CH_2\text{-}CHOH\text{-}CH_2\text{-}O\text{-}\underset{\displaystyle \overset{\|}{O}}{C}\text{-}CH{=}CH_2 \\ \quad | \\ \quad O \\ \quad | \end{array} \quad \text{und} \quad \begin{array}{l} \quad | \\ CH_3\text{-}Si(CH_2)_3\text{-}OH \\ \quad | \\ \quad O \\ \quad | \end{array}$$

Um eine härtbare Kunststoffzusammensetzung mit einer geringen Viskosität und einer hohen Aushärtegeschwindigkeit zu erhalten, ist es zweckmässig, dass die härtbare Kunststoffzusammensetzung 1 bis 10 Gew.-% einer oder mehrerer monomerer Akrylatverbindungen aufweist. Vorzugsweise sind diese aus der Gruppe gewählt, die durch 2-Ethoxyethylakrylat, 2'-Ethoxy-2-ethoxy-ethylakrylat, 3-Methoxypropylakrylat, Butylakrylat, Pentylakrylat, Hexylakrylat, Heptylakrylat, Octylakrylat, Nonylakrylat, 2-Ethyl-hexylakrylat, 2-Phenoxyethyl-akrylat und 2'-(2-Oxybenzophenon)-2-ethoxyethylakrylat gebildet wird.

Die härtbare Kunststoffzusammensetzung kann durch Bestrahlung mit UV-Licht oder mit Elektronen ausgehärtet werden. Wenn die härtbare Kunststoffzusammensetzung durch UV-Licht zum Aushärten gebracht wird, ist es erwünscht, dass die härtbare Kunststoffzusammensetzung 0,1 bis 10 Gew.-% eines durch Licht aktivierbaren Initiators aufweist. Geeignete durch Licht aktivierbare Initiatoren sind aus der Gruppe gewählt, die durch 2-2-Dimethoxy-2--phenylazetophenon, 2-2-Diethoxy-azetophenon, 2,2-Dimethyl-2-hydroxy-azetophenon und 2'-(2--Oxybenzophenon)-2-ethoxyethylakrylat gebildet wird.

Die Erfindung wird im folgenden durch Ausführungsbeispiele und anhand einer Zeichnung näher beschrieben.

Es zeigen:

Fig. 1 die Strukturformel eines Siloxankopolymers zur Verwendung in einer optischen Glasfaser und

Fig. 2 die Strukturformel eines Polyetherurethanakrylats zur Verwendung einer optischen Glasfaser.

Ein Siloxankopolymer mit einer Strukturformel nach Fig. 1, worin p einen Mittelwert von 150 hat, worin q einen Mittelwert von 100 hat und worin r einen Mittelwert von 15 hat, wird wie folgt zubereitet:

In einem Gefäss mit einem Rückflusskühler werden 160,2 g Essigsäure, 193,5 g Dimethyldichlorsilan, 191 g Methylphenyl-dichlorsilan, 17,25 g Methyldichlorsilan und 1,89 g Dimethylmonochlorsilan vermischt. Unter Rühren wird in 45 Minuten 86 g Methanol hinzugetropft. Da dabei gebildete HCl wird abgefangen. Das Gemisch wird 2 Stunden lang gekocht, wonach die niedermolekularen und zyklischen Siloxane durch Extraktion mit Ethanol entfernt werden. Daraufhin werden 200 ml Tetrahydrofuran, eine katalytische Menge Hexachlorplatinsäure und 19,3 g Allylglyzidylether hinzugefügt, wonach das Gemisch 24 Stunden lang unter einem Rückflusskühler gekocht wird. Ein IR-Spektrum des Gemisches zeigt, dass alle Si-H-Bindungen (in dem Spektrum an einem Maximum bei 2140 $cm^{-1}$) erkennbar umgewandelt sind. Das Tetrahydrofuran wird abgedampft und das Erzeugnis wird über $MgSO_4$ getrocknet und durch Filtrierung gereinigt. Daraufhin werden 200 ml Toluol, 12,2 g Akrylsäure und 0,7 g Benzyldimethylamin hinzugefügt. Dieses Gemisch wird 16 Stunden lang unter einem Rückflusskühler gekocht, wonach das Toluol durch Destillierung bei einer Temperatur von 90 °C und einem Druck von 1300 Pa entfernt wird. Das Erzeugnis wird weiterhin durch Filtrierung gereinigt.

Das gebildete Siloxankopolymer hat bei 25 °C eine Viskosität von 1,03 Pa.s und eine Brechzahl von 1,4887. Die zum Aushärten erforderliche Belichtungszeit ist 0,1 s bei Verwendung einer Mitteldruckquecksilberlampe mit einer Intensität von 0,6 $W/cm^2$. Das gebildete Kunstgummi weist die folgenden Eigenschaften auf: die Brechzahl bei 25 °C beträgt 1,4590, die Glasübergangstemperatur beträgt −68 °C und das Elastizitätsmodul beträgt 0,8 MPa.

Damit die Verschleissfestigkeit und die mechanische Festigkeit verbessert werden, wird dieses Siloxankopolymer vor dem Anbringen auf der Glasfaser und vor dem Aushärten mit einem Polyetherurethanakrylat nach Fig. 2 in den Gewichtsverhältnissen wie in der Tabelle angegeben vermischt. Diesen Gemischen werden 4,5 Gew.-% 2,2-Dimethoxy-2-phenyl-azetophenon hinzugefügt. Dies ist eine geeignete Menge zum Aushärten einer 40 µm dicken Schicht auf der Glasfaser. Einige Eigenschaften der härtbaren Kunststoffzusammensetzungen vor dem Aushärten und des Kunstgummis nach dem Aushärten sind in der Tabelle aufgeführt.

TABELLE 1

| | A | B |
|---|---|---|
| Siloxankopolymer/Polyetherurethanakrylat | 3:1 | 1:1 |
| Viskosität bei 25°C (Pa.s) | 3,4 | 10,7 |
| Viskosität bei 45°C (Pa.s) | 1,1 | 3,4 |
| Brechzahl bei 25°C | 1,4839 | 1,4781 |
| Belichtungszeit (s) | 0,1 | 0,5 |
| nach Aushärten: | | |
| Brechzahl bei 25°C | 1,4852 | 1,4787 |
| Glasübergangstemperatur (°C) | -64 | -59 |
| Elastizitätsmodul (MPa) | 0,9 | 1,0 |

Die härtbaren Kunststoffzusammensetzungen zur Verwendung in einer optischen Glasfaser nach der Erfindung schrumpfen beim Aushärten äusserst wenig. Die nach dem Aushärten gebildeten Kunstgummis haben eine hohe Verschleissfestigkeit.

Das durch Aushärten gebildete Kunstgummi weist eine Poisson-Konstante v auf, die nahezu gleich 0,5 ist. Unter Belastung tritt fast kein Schrumpfen auf. Dadurch entstehen keine Mikrobiegungen (und damit zusammenhängende Übertragungsverluste) bei Änderungen der Länge der Glasfaser durch mechanische Spannungen oder Temperaturschwankungen.

**Patentansprüche**

1. Optische Glasfaser mit einer Kunststoffbedeckung, mit einer Glasfaser und einer umhüllenden Schicht aus einem Kunstgummi mit einer Brechzahl, die höher als die der äusseren Schicht der Glasfaser ist, wobei das Kunstgummi aus einer härtbaren Kunststoffzusammensetzung gebildet ist, die ein Kopolymer aufweist, das als monomere Einheiten Dimethylsiloxan und mindestens ein Siloxan aus der Gruppe enthält, die durch Methyl-phenylsiloxan und Diphenylsiloxan gebildet ist, wobei das Siloxanpolymer mindestens zwei Akrylatestergruppe je Molekül aufweist, dadurch gekennzeichnet, dass die härtbare Kunststoffzusammensetzung ausserdem ein Polyurethanakrylat mit einem mittleren Molekulargewicht über 3000 aufweist.

2. Optische Glasfaser nach Anspruch 1, dadurch gekennzeichnet, dass die härtbare Kunststoffzusammensetzung 5 bis 60 Gew.-% des Polyurethanakrylats aufweist.

3. Optische Glasfaser nach Anspruch 1 oder 2, dadurch gekennzeichnet, dass das Polyurethanakrylat eine Verbindung der folgenden Strukturformel ist:

$$CH_2=CH-\underset{\underset{O}{\|}}{C}-O-R_3-\underset{\underset{O}{\|}}{C}-NH-R_2-NH-\underset{\underset{O}{\|}}{C}-O-R_1-\underset{\underset{O}{\|}}{C}-NH-R_2-NH-\underset{\underset{O}{\|}}{C}-O-R_3-\underset{\underset{O}{\|}}{C}-CH=CH_2$$

worin $R_1$ aus der folgenden Gruppe gewählt ist

$$-(CH_2-CH_2-O)_n-,\quad -(CH_2-\underset{\underset{CH_3}{\|}}{CH}-O)_n-,\quad -(CH_2-CH_2-CH_2-CH_2-O)_n-$$

und

$$-CH_2-CH_2-O\!\left[\underset{\underset{O}{\|}}{C}-(CH_2)_4-\underset{\underset{O}{\|}}{C}-O-CH_2-CH_2-O\right]_m$$

worin n im Schnitt grösser als 60 ist und m im Schnitt grösser als 30 ist, worin $R_2$ aus der folgenden Gruppe gewählt ist:

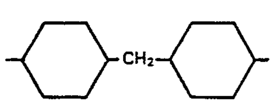
,
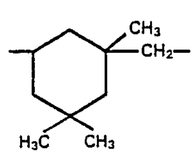

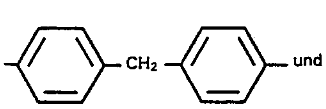
und
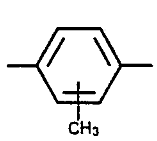

und worin $R_3$ aus der folgenden Gruppe gewählt ist:

$$-(CH_2-CH_2-O)_p-\quad \text{und}\quad -(CH_2-\underset{\underset{CH_3}{|}}{CH}-O)_p-$$

worin p mindestens 1 ist.

4. Optische Glasfaser nach einem der Ansprüche 1 bis 3, dadurch gekennzeichnet, dass das Siloxankopolymer polare Gruppen aufweist.

5. Optische Glasfaser nach Anspruch 4, dadurch gekennzeichnet, dass die polaren Gruppen Hydroxylgruppen sind.

6. Optische Glasfaser nach Anspruch 5, dadurch gekennzeichnet, dass das Sioxan-Kopolymer als monomere Einheiten mindestens eine der folgenden Gruppen aufweist:

```
    |                                              |
CH3-Si-(CH2)3-O-CH2-CHOH-CH2-O-C-CH=CH2  und  CH3-Si(CH2)3-OH
    |                              ||              |
    O                              O               O
    |                                              |
```

7. Optische Glasfaser nach einem der Ansprüche 1 bis 6, dadurch gekennzeichnet, dass die härtbare Kunststoffzusammensetzung 1 bis 10 Gew.-% einer oder mehrerer monomerer Akrylatverbindungen aufweist.

8. Optische Glasfaser nach einem der Ansprüche 1 bis 7, dadurch gekennzeichnet, dass die härtbare Kunststoffzusammensetzung 0,1 bis 10 Gew.-% eines durch Licht aktivierbaren Initiators aufweist.

## Claims

1. An optical glass fibre having a synthetic resin cladding, comprising a glass fibre and an enveloping layer of a synthetic rubber having a refractive index which is higher than the refractive index of the outermost layer of the glass fibre, the synthetic rubber being formed from a curable synthetic resin composition comprising a copolymer which has monomeric units comprising dimethyl siloxane and at least one siloxane selected from the group formed by methyl phenyl siloxane and diphenyl siloxane, which siloxane copolymer comprises at least two acrylate ester groups per molecule, characterized in that the curable synthetic resin composition further comprises a polyurethane acrylate which has an average molecular weight of more than 3000.

2. An optical glass fibre as claimed in Claim 1, characterized in that the curable synthetic resin composition comprises 5 to 60% by weight of polyurethane acrylate.

3. An optical glass fibre as claimed in Claim 1 or 2, characterized in that the polyurethane acrylate is a compound of the following structural formula:

```
CH2=CH-C-O-R3-C-NH-R2-NH-C-O-R1-C-NH-R2-NH-C-O-R3-C-CH=CH2
        ||    ||         ||    ||         ||    ||
        O     O          O     O          O     O
```

wherein $R_1$ is selected from the following group:

```
-(CH2-CH2-O)n-,  -(CH2-CH-O)n-,  -(CH2-CH2-CH2-CH2-O)n-
                       ||
                       CH3
```

and

```
-CH2-CH2-O-[-C-(CH2)4-C-O-CH2-CH2-O-]-m
             ||       ||
             O        O
```

wherein the average value of n exceeds 60, wherein the average value of m exceeds 30, and wherein $R_2$ is selected from the following group:

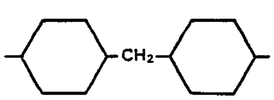
,
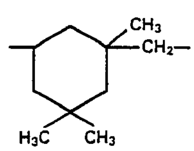

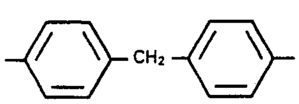
and
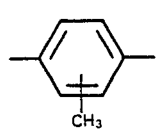

and wherein $R_3$ is selected from the following group:

```
-(CH2-CH2-O)p-  and  -(CH2-CH-O)p,
                           ||
                           CH3
```

wherein p is at least 1.

4. An optical glass fibre as claimed in any of the Claims 1 to 3, characterized in that the siloxane copolymer comprises polar groups.

5. An optical glass fibre as claimed in Claim 4, characterized in that the polar groups are hydroxyl groups.

6. An optical glass fibre as claimed in Claim 5, characterized in that the siloxane copolymer comprises at least one of the following groups as monomeric units:

```
    |                                              |
CH3-Si-(CH2)3-O-CH2-CHOH-CH2-O-C-CH=CH2  and  CH3-Si(CH2)3-OH
    |                              ||              |
    O                              O               O
    |                                              |
```

7. An optical glass fibre as claimed in any of the Claims 1 to 6, characterized in that the curable synthetic resin composition contains 1 to 10% by weight of one or more monomeric acrylate compounds.

8. An optical glass fibre as claimed in any of the Claims 1 to 7, characterized in that the curable synthetic resin composition contains 0.1 to 10% by weight of an initiator that can be activated by light.

**Revendications**

1. Fibre optique en verre à revêtement en matière synthétique, comprenant une fibre en verre et une couche enveloppante en caoutchouc synthétique d'un indice de réfraction qui est supérieur à celui de la couche extérieure de la fibre en verre, le caoutchouc synthétique étant formé à partir d'une composition de matière synthétique durcissante comprenant un copolymère contenant comme unité monomère du diméthylsiloxane et au moins un siloxane choisi dans le groupe constitué par le méthylphénylsiloxane et le diphénylsiloxane, le copolymère de siloxane contenant au moins deux groupes d'esters d'acrylate par molécule, caractérisée en ce que la composition de matière synthétique contient en outre un acrylate de polyuréthane d'un poids moléculaire moyen supérieur à 3000.

2. Fibre de verre optique selon la revendication 1, caractérisée en ce que la composition de matière synthétique durcissante contient 5 à 60% en poids de l'acrylate de polyuréthane.

3. Fibre optique en verre selon la revendication 1 ou 2, caractérisée en ce que l'acrylate de polyuréthane est un composé répondant à la formule développée:

$$CH_2{=}CH\text{-}\underset{\substack{\|\\O}}{C}\text{-}O\text{-}R_3\text{-}\underset{\substack{\|\\O}}{C}\text{-}NH\text{-}R_2\text{-}NH\text{-}\underset{\substack{\|\\O}}{C}\text{-}O\text{-}R_1\text{-}\underset{\substack{\|\\O}}{C}\text{-}NH\text{-}R_2\text{-}NH\text{-}\underset{\substack{\|\\O}}{C}\text{-}O\text{-}R_3\text{-}\underset{\substack{\|\\O}}{C}\text{-}CH{=}CH_2$$

dans laquelle $R_1$ est choisi dans le groupe suivant

$$\text{-}(CH_2\text{-}CH_2\text{-}O)_n\text{-},\quad \text{-}(CH_2\text{-}\underset{\substack{\|\\CH_3}}{CH}\text{-}O)_n\text{-},\quad \text{-}(CH_2\text{-}CH_2\text{-}CH_2\text{-}CH_2\text{-}O)_n\text{-}$$

et

$$\text{-}CH_2\text{-}CH_2\text{-}O\text{+}\underset{\substack{\|\\O}}{C}\text{-}(CH_2)_4\text{-}\underset{\substack{\|\\O}}{C}\text{-}O\text{-}CH_2\text{-}CH_2\text{-}O\text{+}_m$$

n étant en moyenne supérieur à 60 et m étant en moyenne supérieur à 30, $R_2$ étant choisi dans le groupe suivant:

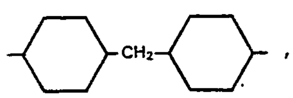 , 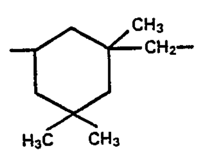

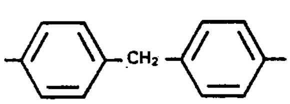 et 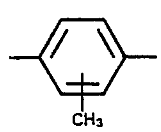

et dans laquelle $R_3$ est choisi dans le groupe suivant:

$$\text{-}(CH_2\text{-}CH_2\text{-}O)_p\text{-}\quad \text{et}\quad (CH_2\text{-}\underset{\substack{|\\CH_3}}{CH}\text{-}O)_p\text{-}$$

p étant au moins égal à l'unité.

4. Fibre optique en verre selon l'une des revendications 1 à 3, caractérisée en ce que le copolymère de siloxane présente des groupes polaires.

5. Fibre optique en verre selon la revendication 4, caractérisée en ce que les groupes polaires sont des groupes de hydroxyle.

6. Fibre optique en verre selon la revendication 5, caractérisée en ce que le copolymère de siloxane présente comme unité monomère au moins l'un des groupes suivantes:

$$CH_3\text{-}\overset{|}{\underset{\substack{|\\O\\|}}{Si}}\text{-}(CH_2)_3\text{-}O\text{-}CH_2\text{-}CHOH\text{-}CH_2\text{-}O\text{-}\underset{\substack{\|\\O}}{C}\text{-}CH{=}CH_2\quad \text{et}\quad CH_3\text{-}\overset{|}{\underset{\substack{|\\O\\|}}{Si}}(CH_2)_3\text{-}OH$$

7. Fibre optique en verre selon l'une des revendications 1 à 6, caractérisée en ce que la composition de matière synthétique durcissante contient 1 à 10% en poids d'un ou de plusieurs composés d'acrylate monomères.

8. Fibre optique en verre selon l'une des revendications 1 à 7, caractérisée en ce que la composition de matière synthétique durcissante contient 0,1 à 10% en poids d'un initiateur activé à l'aide de lumière.

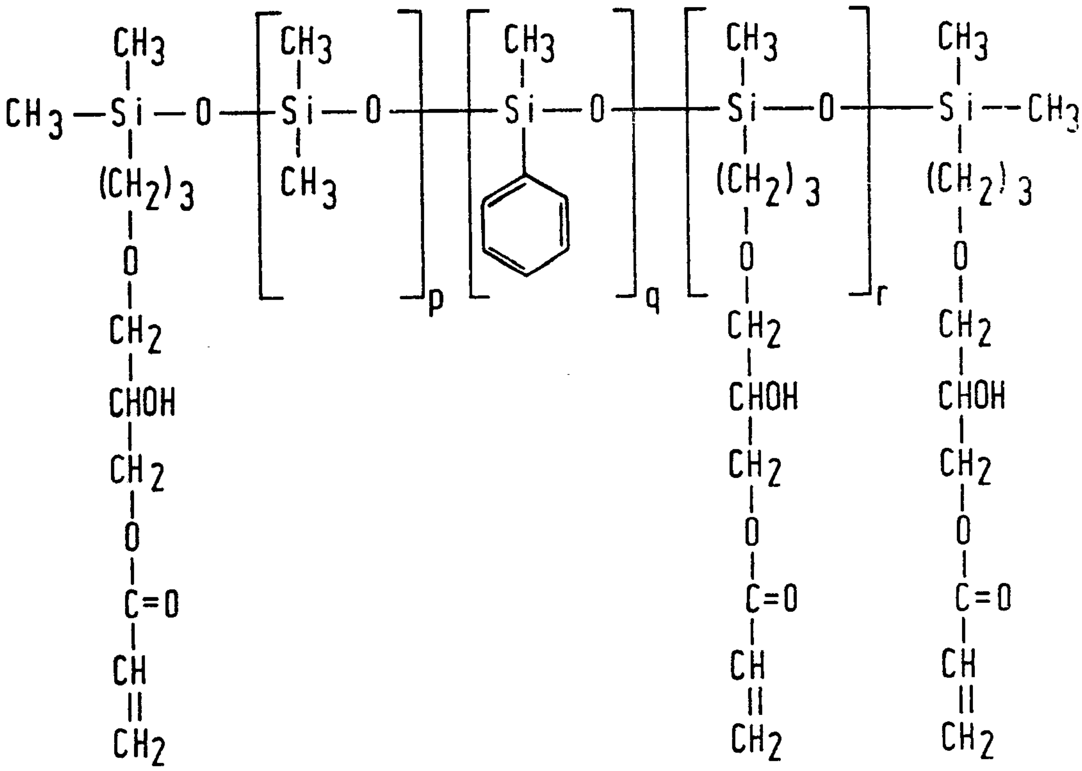

FIG. 1

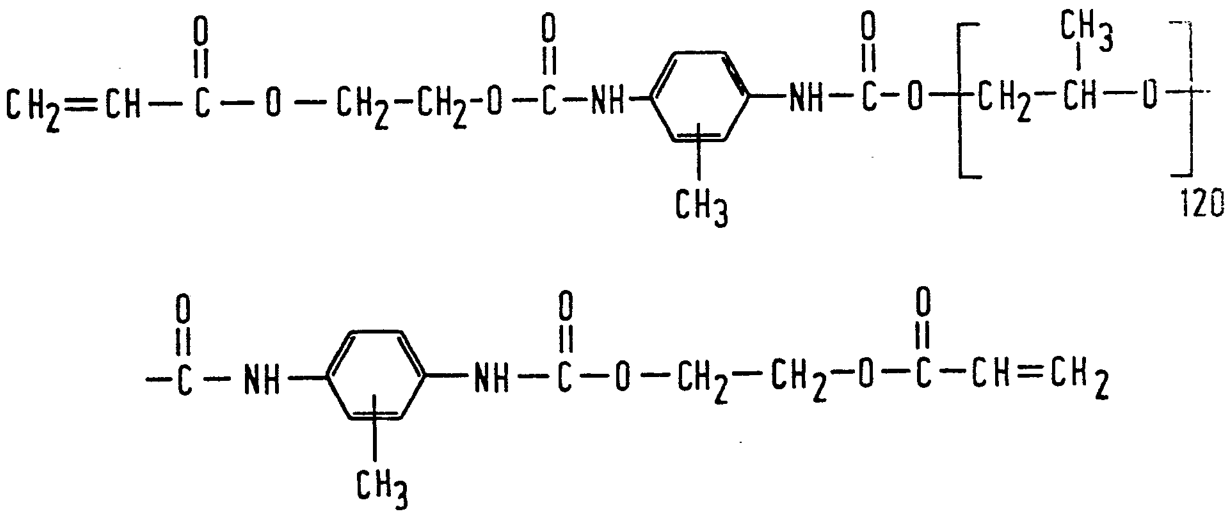

FIG. 2